# EUROPEAN PATENT SPECIFICATION

(11) **EP 1 816 864 B1**
(45) Date of publication and mention of the grant of the patent: **21.06.2017**
(21) Application number: 06254937.3
(22) Date of filing: 25.09.2006
(51) Int. Cl.: H04N 5/76, H04N 5/783, H04N 21/4147, H04N 21/433, H04N 21/47, H04N 21/482, H04N 21/84, H04N 21/845

(54) **An apparatus and method for permanently storing a broadcast program during time machine function**
Ein Gerät und ein Verfahren zum dauernden Speichern eines Rundfunkprogramms bei Zeitschiebefunktion.
Un appareil et un procédé de stockage permanent d'un programme de diffusion pendant le fonctionnement à décalage de temps.

(30) Priority: 15.12.2005 KR 20050123668
(43) Date of publication of application: 08.08.2007
(73) Proprietor: LG Electronics Inc., Youngdungpo-gu Seoul (KR)
(72) Inventor: Eun, Hyung Cho, A-703, LG Electronics Dormitory, Gyeongsangbuk-do (KR)
(74) Representative: Thorniley, Peter

(56) References cited:
- EP-A2- 1 575 285
- WO-A1-99/60493
- US-A1- 2002 092 021

## Description

The present invention relates to a display device, and more particularly, but not exclusively, to a device for permanently storing a broadcast program during time machine function (or time shift).

The advancement of television technology made it possible to provide various functions in addition to receiving broadcast programs, thanks to enhanced microprocessors and increases in memory size. One of the various functions is a time machine (or time shift) function. The time machine function enables users to record the broadcast programs and play the recorded programs back at a later time. Moreover, the time machine function provides pause, backward, and forward play of broadcast programs in real time. For example, a television equipped with a time machine function using a personal video recorder (PVR) or a digital video recorder (DVR) has a hard disk drive for storing and replaying received broadcast programs as well as external input signals such as signals from a video player.

According to the conventional time machine function, a television is only able to temporarily store received programs, thereby erasing all the stored programs in the hard disk drive after ending the time machine function. Also, when a new program starts to be stored, the oldest program is erased because the time machine storage area is limited.

Therefore, it is highly desired to develop a technology which permanently stores broadcast programs by each program and/or by each program segment in order to reverse, fast forward, play, pause, index, fast/slow reverse play and fast/slow play the broadcast programs after ending the time machine function.

A prior art document, US2002/092021, discloses an apparatus having a receiver configured to receive a program; a first memory (S1) configured to temporarily store the received program; an on screen display data generator (138) for displaying on screen data on a screen; an address generator configured to generate location information indicating a location where the program is stored in the first memory (S1), the generated location information including a recording-start address; a third memory (104); and a controller (102) configured to control display of program information of the program and retrieve the stored location information from the time machine recording table when a request for recording the program is received, and control permanent storage of the program at a second memory (S2) using the retrieved location information.

In this prior art apparatus content of the previous channel is cached when a channel is.. changed.

The present invention is set out in the independent claims. Some optional features are set out in the dependent claims.

In one aspect, there is an apparatus and method for permanently storing a broadcast program during time machine function that substantially obviates one or more problems due to the limitations and disadvantages of the prior art.

In another aspect, there is provided an apparatus and method for permanently storing a broadcast program by a program unit among a plurality of temporarily stored programs during time machine function.

Another aspect relates to providing an apparatus and method for permanently storing a user-selected broadcast program segment through the user interface among a plurality of temporarily stored programs during the time machine function.

The accompanying drawings, which are included to provide a further understanding of the invention and are incorporated in and constitute a part of this application, illustrate embodiment(s) of the invention by way of example only.

In the drawings;
FIG. 1 illustrates a block schematic diagram of a television with a personal video recorder (PVR);
FIG. 2 illustrates a flowchart of the process of temporarily storing a program during the time machine function according to the embodiment of FIG. 1;
FIG. 3 illustrates a flowchart of the process of permanently storing a program during the time machine function according to the embodiment of FIG. 1;
FIG. 4A illustrates an enlarged view of the storage (126) in FIG. 1 showing a time machine storage area and permanent storage areas;
FIG. 4B illustrates a time machine recording table comprising time machine recording information.
FIG. 5 illustrates an on screen display (OSD) displaying a list of programs temporarily stored at the time machine storage area; and
FIG. 6 illustrates an OSD displaying the progress bar (PB).

Wherever possible, the same reference numbers will be used throughout the drawings to refer to the same or like parts.

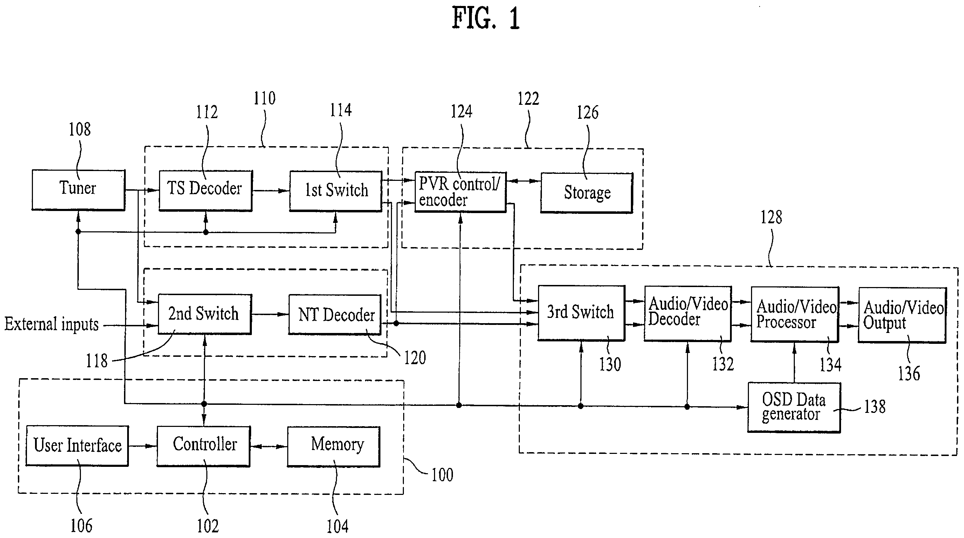

FIG. 1 shows a block schematic diagram of a television with a personal video recorder (PVR). The television comprises a controller device (100), a tuner (108) for searching a channel by the control of the controller device (100), a digital signal processor (110) for processing digital signals, an analog signal processor (116) for processing analog signals, a personal video recorder (PVR, 122) for saving and replaying the analog and/or digital signals, and a signal output part (128) for outputting signals from the analog signal processor, the digital signal processor, or the PVR.

The controller device (100) further comprises a controller (102), a memory (104) and a user interface (106). The controller (102) controls the general operations of the television and stores in the time machine recording table the time machine recording information containing the program information, the recording-start address and time, and the recording-end address and time of the broadcast programs stored in the time machine storage area (S1). The time machine recording table having the time machine recording information is updated whenever the channel or the program is changed.

Moreover, the controller controls the On Screen Display (OSD) data generator (138) for generating the OSD data displaying a list of the temporarily-stored plurality of programs. When a user selects a program which is displayed on the screen using the OSD data generator, the selected program is copied from the time machine storage area to one of permanent storage areas (S2). The controller stores the program according to the genre of the program.

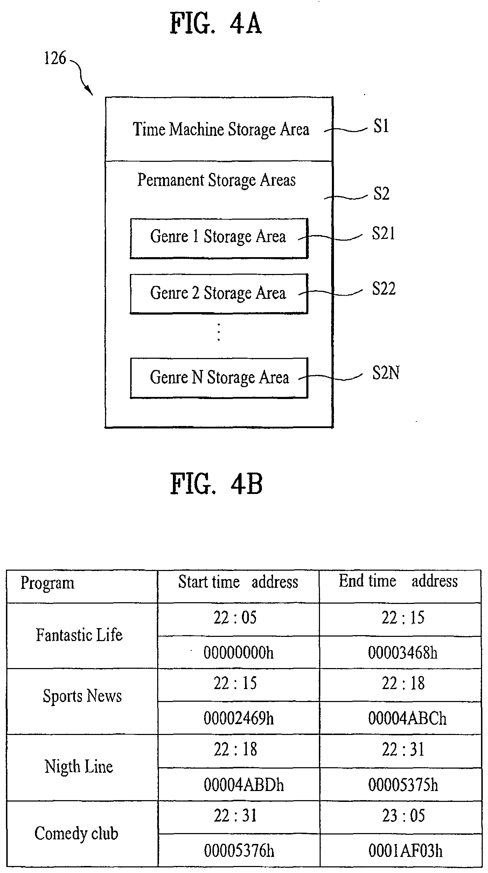

The memory (104) stores various information including processing commands of the controller. Specially, the memory (104) stores the time machine recording table comprising a plurality of time machine recording information. The time machine recording table contains titles, genres, program information, recording-start address and time, and recording-end address and time of the temporarily stored programs as shown in FIG. 4B.

The user interface (106) is an appropriate communication technology, such as keyboards, remote controls or keypad devices for providing commands or information from the user to the controller (102).

The tuner (108) searches a channel according to the control signal of the controller (102) and provides digital signal to digital signal processor (110) and analog signal to analog signal processor (116).

The digital signal processor (110) includes Transport Stream (TS) decoder (112) and the first switch (114). The TS decoder (112) decodes the digital signal from the tuner (108), transforms it to audio, video or data stream, and transmits it to the first switch (114).

The first switch (114) provides the audio, video or data stream from TS decoder (112) to PVR (122) and/or the signal output part (128).

The analog signal processor (116) includes the second switch and NT (National Television Standards Committee: NTSC) decoder (120).

The second switch (118) receives analog signals from the tuner (108) and/or from external input, and provides one of the two analog signals to NT (NTSC) decoder (120).

The NT decoder (120) decodes the analog signal from the tuner (108) or from the external input, transforms it to audio, video or data stream, and transmits it to the PVR part (122) or signal output part (128).

The PVR part (122) includes a PVR encoder (124) and storage (126). The PVR encoder (124) stores in the storage (126) the audio, video and data streams from the digital signal processor (110) according to a control signal of the controller (102), or stores the audio, video and data streams in the storage (126) by Moving Pictures Experts Group (MPEG)-encoding the audio and video signals from the analog signal processor (116).

The storage (126) stores audio, video and data streams from the PVR encoder (124) and is a hard disk drive including a hard disk. Especially, the hard disk of the storage (126) has a time machine storage area (S1) which temporarily stores programs during the time machine function and permanent storage areas (S2) which permanently stores user-selected programs. The permanent storage areas (S2) also has N areas (S21∼S2N) for storing programs by genres, for example drama, action, comedy, show, etc. as shown in FIG. 4A.

The addresses of the audio, video and data streams in the storage (126) are provided to the controller (102) by the PVR encoder (124).

The storage (126) actually stores audio, video and data streams received from broadcasting, and audio and video streams encoded with signals from external inputs. However, it is regarded for convenience that the storage (126) stores broadcast programs because the present invention guides by program by program.

The signal output part (128) includes the third switch (130), audio and video decoder (132), audio and video processor (133), audio and video output (136) and OSD generator (138).

The second switch (130) selects one of the outputs from the digital signal processor (110), analog signal processor (116) and PVR part (122), and provides the selected output to the audio and video decoder (132).

The audio and video decoder (132) decodes the audio and video streams into audio and video data if the input is the audio and video streams and provides it to the audio and video processor (134). If the input is the audio and video data, then the audio and video decoder (132) provides the audio and video data itself to the audio and video processor (134).

The audio and video processor (134) provides the audio and video data from the audio and video decoder (132) to the audio and video output (136).

Also, the audio and video processor (134) provides the video data mixed with the OSD data from the OSD generator (138) to the audio and video output (136).

The audio and video output (136) outputs the audio and video data from the audio and the video processor (134) using a display device and/or a speaker.

The OSD generator (138) generates OSD data according to a signal from a controller (102) and provides it to the audio and video processor (134).

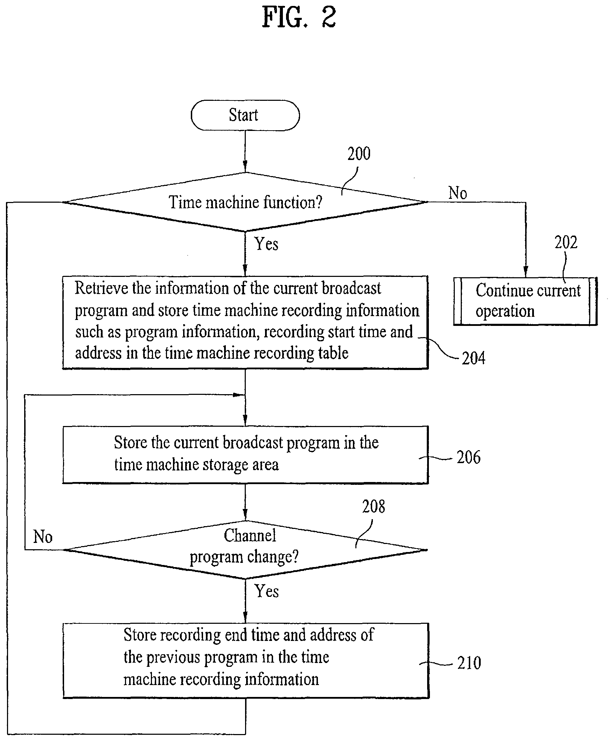

Turning now to FIG. 2, a flowchart is shown illustrating the process of recording a program during the time machine function according to the embodiment of FIG. 1.

In step 200, the controller (102) checks if the user performs the time machine function. If the user performs the time machine function, the controller (102) retrieves the information of the current broadcast program and stores time machine recording information such as program information and recording start address in the time machine recording table in step 204. It is to be noted that the program information may be obtained from Packet Identification (PID) and Electronic Program Guide (EPG). The EPG is a database containing information regarding broadcast schedules from various broadcast channels.

Also, the controller (102) controls the PVR encoder (124) in order to temporarily store the program at the time machine storage area (S1) during the time machine function in step 206.

In step 208, the controller checks if the user orders to change the channel or the television receives a different program in the same channel while storing the program.

The controller (102) stores the recording end time and the recording end address of the previous program in the time machine recording information when the user orders to change the channel or the television receives a different program in the same channel while storing the program in step 210.

After storing the recording end time and the recording end address of the previous program, the controller (102) goes back to step 200 and stores time machine recording information about the next program which the changed channel displays and the next program itself.

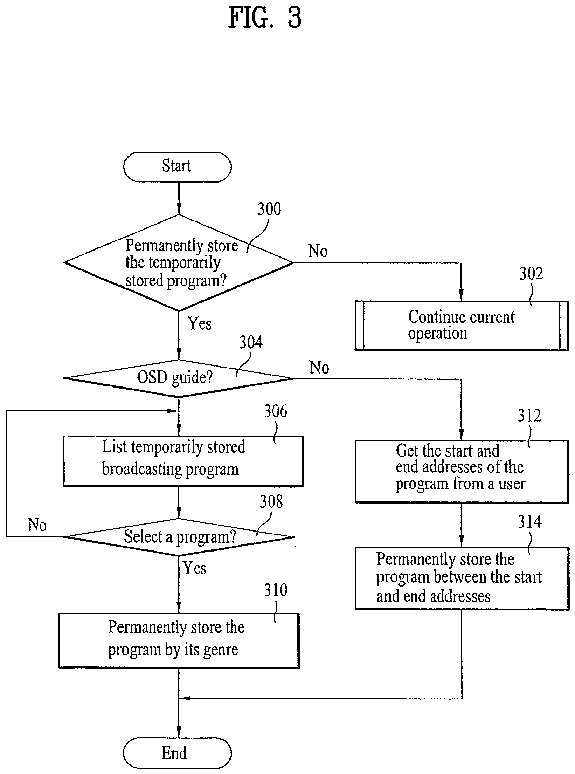

Turning now to FIG. 3, a flowchart is shown illustrating the process of permanently recording a program during the time machine function.

In step 300, the controller (102) checks if the user orders to permanently store the temporarily stored program according to time machine function through the user interface (106).

When the user orders to permanently store the temporarily stored program according to the time machine function through the user interface (106), the controller (102) outputs the OSD guide asking whether the program is selected automatically or by the user-input of the start and end addresses of the program in step 304.

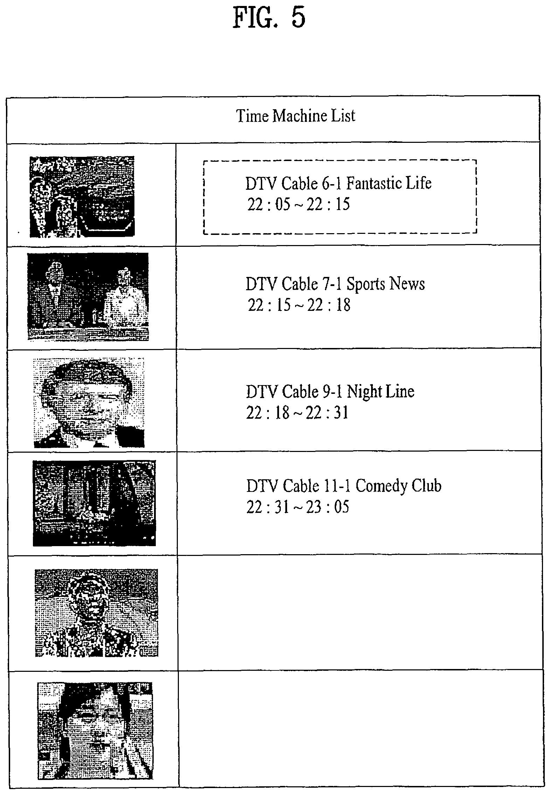

If the user chooses the automatic selection of the program according to the OSD guide, the controller (102) retrieves the time machine recording table from the memory (104) and controls the OSD generator (138) to generate the OSD data for showing the list of the broadcasting programs in the time machine storage area (S1) in step 306 as shown in FIG. 5.

In step 308, the controller (102) checks if the user wants to select one of the programs that the OSD shows. When the user selects one of the programs, the controller (102) retrieves the time machine recording information for the program from the memory (102) and finds start and end addresses of the program from the time machine recording information.

After finding the start and end addresses of the program, the controller (102) permanently stores the program at the memory according to the start and end addresses. Specially, the controller (102) stores the program according to its genre contained in the time machine recording information.

If the program is selected by the user-input of the start and end addresses of the program in step 304, the controller (102) gets the start and end addresses of the program from the user through the user interface (106) in step 312.

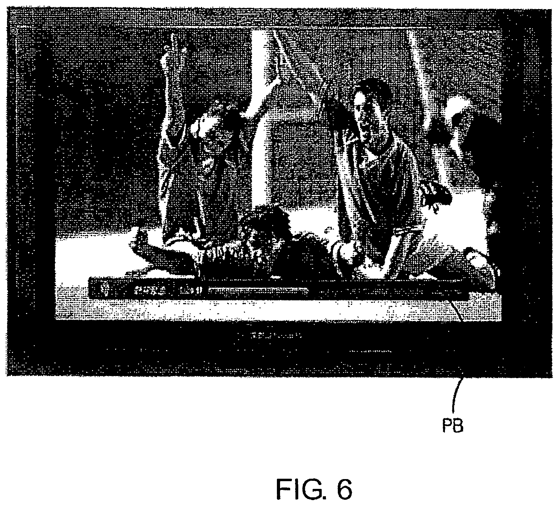

The start and end addresses which locate a program segment stored at the time machine recording information can be indicated on the progress bar (PB) which shows the location of the addresses as shown in FIG. 6.

After the start and end addresses of stored broadcasting program segment are given through the user interface (106), the controller (102) retrieves the program according to the start and end addresses, and permanently stores the program at the one of the permanent storage areas (S2) in step 314.

The invention makes it possible to permanently store a program among the temporarily stored programs during time machine function. Also, the invention makes it possible to permanently store a program segment through the user input among the temporarily stored program segments during time machine function.

While the invention has been described with respect to the physical embodiments constructed in accordance therewith, it will be apparent to those skilled in the art that various modifications, variations and improvements of the present invention can be made. Thus, it is intended that the present invention covers the modifications and variations of this invention provided they come within the scope of the appended claims and their equivalents.

## Claims

1. An apparatus for permanently storing a program during a time machine function comprising:
a receiver configured to receive a program;
a hard disk drive including a hard disk having first memory area (S1) and a second memory area (S2), the first memory area (S1) being configured to temporarily store the received program;
an on screen display data generator (138) for displaying on screen data on a screen;
an address generator configured to generate location information indicating a location where the program is stored in the first memory (S1), the generated location information including a recording-start address;
a third memory (104); and
a controller (102) configured to control display of program information of the program and control permanent storage of the program at the second memory area (S2),
**characterized in that**:
the time machine function provides pause, backward and forward play of paused programs in real time;
the location information further includes a recording-end address;
the third memory (104) is configured to store a time machine recording table containing program information of the program, the generated location information and genre information; and
the controller (102) is configured to cause storage of the recording-end address of the program in the time machine recording table when a channel is changed to a changed channel and to temporarily store a program of the changed channel in the first memory area (S1),
further **characterized in that**,
the controller (102) is configured to check if the user orders to permanently store the temporarily stored program according to time machine function through a user interface (106),
wherein when the user orders to permanently store the temporarily stored program according to the time machine function through the user interface (106), the controller is configured to output an on screen display guide asking whether the program is selected automatically or by the user-input of the start and end addresses of the program,
wherein if the user chooses automatic selection of the program according to the on screen guide, the controller is configured to retrieve the time machine recording table from the third memory (104) and to control the OSD generator to generate the OSD data for showing the list of the broadcasting programs in the time machine storage area and to check if the user wants to select one of the programs that an OSD shows,
wherein when the user selects one of the programs that the OSD shows, the controller is configured to retrieve the time machine recording table for the program from the third memory area (104) and find start and end addresses of the program from the time machine recording table,
wherein after finding the start and end addresses of the program, the controller is configured to permanently store the program at the second memory area (S2) according to the start and end addresses, wherein permanently storing is carried out according to a genre of the program contained in the time machine recording table,
wherein, if the program is selected by the user-input of the start and end addresses of the program, the controller is configured to get the start and end addresses of the program from the user through the user interface (106), retrieve the program according to the start and end addresses, and permanently store the program in the second memory area (S2).

2. The apparatus of claim 1, further comprising a personal video recorder (PVR).

3. The apparatus of claim 1, further comprising a user interface (106) for receiving the request.

4. The apparatus of claim 1, wherein the time machine recording table is updated whenever a channel or the program is changed.

5. The apparatus of claim 1, wherein the controller (102) is configured to control the OSD data generator for generating the OSD data displaying a list of the temporarily-stored plurality of programs.

6. The apparatus of claim 1, wherein when a user selects a program which is displayed on the screen using the OSD data generator, the selected program is copied from the first memory to the second memory area (S2).

7. The apparatus of claim 1, wherein the third memory (103) stored various information including processing commands of the controller (102).

8. The apparatus of claim 7, wherein the third memory (103) stores time machine recording table comprising a plurality of time machine recording information.

9. The apparatus of claim 8, wherein the time machines recording table contains titles, genres, program information, recording-start addresses and recording-end addresses of the temporarily stored program.

10. The apparatus of claim 1, wherein further comprising a tuner (108) for searching a channel according to a control signal of the controller (102) and providing digital signals to a digital signal processor (110) and analog signals to an analog signal processor (116).

11. The apparatus of claim 1, wherein the second memory area (S2) has a plurality of areas for storing programs by genres.

12. A method for permanently storing a program during a time machines function comprising:
receiving a program;
storing temporarily the received program in a first memory area (S1) of a hard disk drive including a hard disk according to the time machine function;
generating location information indicating a location where the program is stored in the first memory area (S1), the generated location information including a recording-start address displaying program information of the program and receiving a request for recording the program;
retrieving the generated location information; and
storing permanently the program at a second memory area (S2) of the hard disk drive,
wherein the method further includes:
storing the generated location information in a time machine recording table in a third memory (104); and
**characterized by**
the time machine function providing pause, backward and forward play of paused programs in real time;
the location information further including a recording-end address;
storing the recording-end address of the program in the time machine recording table comprising genre information when a channel is changed to a changed channel; and
temporarily storing a program of the changed channel in the first memory area (S1),
further **characterized in that**,
the method further comprises checking if the user orders to permanently store the temporarily stored program according to time machine function through a user interface (106),
wherein when the user orders to permanently store the temporarily stored program according to the time machine function through the user interface (106), the method comprises outputting an on screen display guide asking whether the program is selected automatically or by the user-input of the start and end addresses of the program,
wherein if the user chooses automatic selection of the program according to the on screen guider, the method comprises retrieving the time machine recording table from the third memory (104) and controlling the OSD generator to generate the OSD data for showing the list of the broadcasting programs in the time machine storage area and the method further comprises checking if the user wants to select one of the programs that an OSD shows,
wherein when the user selects one of the programs that the OSD shows, the method comprises retrieving the time machine recording table for the program from the third memory (104) and finds start and end addresses of the program from the time machine recording table,
wherein after finding the start and end addresses of the program, the method comprises permanently storing the program at the second memory area (S2) according to the start and end addresses, wherein permanently storing is carried out according to a genre of the program contained in the time machine recording table,
wherein, if the program is selected by the user-input of the start and end addresses of the program, the method comprises getting the start and end addresses of the program from the user through the user interface (106), retrieving the program according to the start and end addresses, and permanently storing the program at the second memory area (S2).

13. The method of claim 12, further comprising storing the program information of the program when the user changes the channel.

14. The method of claim 13, wherein the program information is obtained from Packet Identification (PID) and Electronic Program Guide (EPG).

15. The method of claim 12, further comprising storing the program information of the program when the channel displays another program.

16. The method of claim 15, wherein the program information is obtained from Packet Identification (PID) and Electronic Program Guide (EPG).

17. The method of claim 12, further comprising storing the program information of the program when an external input data is supplied.

18. The method of claim 17, wherein the program information is obtained from Packet Identification (PID) and Electronic Program Guide (EPG).

19. The method of claim 12, comprising, if any address in the program is selected, automatically finding start and end addresses of the program, and permanently storing the program.

## Patentansprüche

1. Vorrichtung zum dauerhaften Speichern eines Programms bei einer Zeitschiebefunktion, aufweisend:
einen Empfänger, der zum Empfangen eines Programms gestaltet ist;
ein Festplattenlaufwerk, einschließlich einer Festplatte mit einem ersten Speicherbereich (S1) und einem zweiten Speicherbereich (S2), wobei der erste Speicherbereich (S1) so gestaltet ist, dass er das empfangene Programm vorübergehend speichert;
einen Bildschirmanzeige-Datengenerator (138) zum Anzeigen von Bildschirmdaten auf einem Bildschirm;
einen Adressgenerator, der zum Erzeugen von Ortsinformationen, die einen Ort anzeigen, an dem das Programm in dem ersten Speicher (S1) gespeichert wird, wobei die erzeugten Ortsinformationen eine Aufzeichnungsstartadresse enthalten, gestaltet ist;
einen dritten Speicher (104) und
eine Steuereinheit (102), die zum Steuern der Anzeige der Programminformationen des Programms und zum Steuern der dauerhaften Speicherung des Programms in dem zweiten Speicherbereich (S2) gestaltet ist,
**dadurch gekennzeichnet, dass**:
die Zeitschiebefunktion Anhalten, Vorwärts- und Rückwärts-Wiedergabe angehaltener Programme in Echtzeit bereitstellt;
die Ortsinformationen ferner eine Aufzeichnungsendadresse enthalten;
der dritte Speicher (104) zum Speichern einer Zeitschiebeaufzeichnungstabelle, die Programminformationen des Programms, die erzeugten Ortsinformationen und Genreinformationen enthält, gestaltet ist und
die Steuereinheit (102) zum Bewirken des Speicherns der Aufzeichnungsendadresse des Programms in der Zeitschiebeaufzeichnungstabelle, wenn ein Kanal auf einen geänderten Kanal geändert wird, und zum vorübergehenden Speichern eines Programms des geänderten Kanals in dem ersten Speicherbereich (S1) gestaltet ist,
ferner **dadurch gekennzeichnet, dass**
die Steuereinheit (102) zum Überprüfen, ob der Benutzer das dauerhafte Speichern des vorübergehend gespeicherten Programms gemäß der Zeitschiebefunktion durch eine Benutzerschnittstelle (106) anordnet, gestaltet ist,
wobei, wenn der Benutzer das dauerhafte Speichern des vorübergehend gespeicherten Programms gemäß der Zeitschiebefunktion durch die Benutzerschnittstelle (106) anordnet, die Steuereinheit zur Ausgabe einer Bildschirmanzeigeanleitung gestaltet ist, die fragt, ob das Programm automatisch oder durch die Benutzereingabe der Start- und Endadressen des Programms ausgewählt wird,
wobei, wenn der Benutzer die automatische Auswahl des Programms gemäß der Bildschirmanzeigeanleitung wählt, die Steuereinheit zum Abrufen der Zeitschiebeauf zeichnungstabelle von dem dritten Speicher (104) und zum Steuern des Bildschirmanzeige-Generators gestaltet ist, um die Bildschirmanzeigedaten zum Anzeigen der Liste der Rundfunkprogramme in dem Zeitschiebespeicherbereich zu erzeugen, und zum Überprüfen, ob der Benutzer eines der Programme, das eine Bildschirmanzeige anzeigt, auswählen will,
wobei, wenn der Benutzer eines der Programme wählt, welche die Bildschirmanzeige anzeigt, die Steuereinheit zum Abrufen der Zeitschiebeaufzeichnungstabelle für das Programm von dem dritten Speicherbereich (104) und zum Feststellen der Start- und Endadressen des Programms von der Zeitschiebeaufzeichnungstabelle gestaltet ist,
wobei, nach dem Feststellen der Start- und Endadressen des Programms, die Steuereinheit zum dauerhaften Speichern des Programms bei dem zweiten Speicherbereich (S2) gemäß den Start- und Endadressen gestaltet ist, wobei das dauerhafte Speichern gemäß einem Genre des Programms, das in der Zeitschiebeaufzeichnungstabelle enthaltenen ist, ausgeführt wird,
wobei, wenn das Programm durch die Benutzereingabe der Start- und Endadressen des Programms ausgewählt ist, die Steuereinheit zum Erhalten der Start- und Endadressen des Programms von dem Benutzer über die Benutzerschnittstelle (106), zum Abrufen des Programms gemäß den Start- und Endadressen und zum dauerhaften Speichern des Programms in dem zweiten Speicherbereich (S2) gestaltet ist.

2. Vorrichtung nach Anspruch 1, welche ferner einen Personal Video Recorder (PVR) aufweist

3. Vorrichtung nach Anspruch 1, welche ferner eine Benutzerschnittstelle (106) zum Empfangen der Anfrage aufweist.

4. Vorrichtung nach Anspruch 1, wobei die Zeitschiebeaufzeichnungstabelle aktualisiert wird, sobald ein Kanal oder das Programm geändert wird.

5. Vorrichtung nach Anspruch 1, wobei die Steuereinheit (102) zum Steuern des Bildschirmanzeige-Datengenerators zum Erzeugen der Bildschirmanzeigedaten, die eine Liste der vorübergehend gespeicherten mehreren Programme anzeigen, gestaltet ist.

6. Vorrichtung nach Anspruch 1, wobei, wenn ein Benutzer ein Programm auswählt, das auf dem Bildschirm unter Verwendung des Bildschirmanzeige-Datengenerators angezeigt ist, das ausgewählte Programm von dem ersten Speicher auf den zweiten Speicherbereich (S2) kopiert wird.

7. Vorrichtung nach Anspruch 1, wobei der dritte Speicher (103) verschiedene Informationen, einschließlich Verarbeitungsbefehle der Steuereinheit (102) speichert.

8. Vorrichtung nach Anspruch 7, wobei der dritte Speicher (103) die Zeitschiebeaufzeichnungstabelle, die mehrere Zeitschiebeaufzeichnungsinformationen aufweist, speichert.

9. Vorrichtung nach Anspruch 8, wobei die Zeitschiebeaufzeichnungstabelle Titel, Genres, Programminformationen, Aufzeichnungsstartadressen und Aufzeichnungsendadressen des vorübergehend gespeicherten Programms enthält.

10. Vorrichtung nach Anspruch 1, wobei sie ferner einen Tuner (108) zum Suchen eines Kanals gemäß einem Steuersignal der Steuereinheit (102) und zum Bereitstellen digitaler Signale an einen digitalen Signalprozessor (110) und analoger Signale an einen analogen Signalprozessor (116) aufweist.

11. Vorrichtung nach Anspruch 1, wobei der zweite Speicherbereich (S2) mehrere Bereiche zum Speichern von Programmen nach Genres hat.

12. Verfahren zum dauerhaften Speichern eines Programms bei einer Zeitschiebefunktion, aufweisend:
Empfangen eines Programms;
vorübergehendes Speichern des empfangenen Programms in einem ersten Speicherbereich (S1) eines Festplattenlaufwerks, das eine Festplatte gemäß der Zeitschiebefunktion enthält;
Erzeugen von Ortsinformationen, die einen Ort anzeigen, an dem das Programm in dem ersten Speicherbereich (S1) gespeichert ist, wobei die erzeugten Ortsinformationen eine Aufzeichnungsstartadresse enthalten, die Programminformationen des Programms anzeigt und Empfangen einer Anforderung zum Aufzeichnen des Programms;
Abrufen der erzeugten Ortsinformationen und
dauerhaftes Speichern des Programms in einem zweiten Speicherbereich (S2) des Festplattenlaufwerks,
wobei das Verfahren ferner Folgendes enthält:
Speichern der erzeugten Ortsinformationen in einer Zeitschiebeaufzeichnungstabelle in einem dritten Speicher (104) und
**gekennzeichnet durch**
die Zeitschiebefunktion, die Anhalten, Vorwärts- und Rückwärts-Wiedergabe angehaltener Programme in Echtzeit bereitstellt;
die Ortsinformationen, die ferner eine Aufzeichnungsendadresse enthalten;
Speichern der Aufzeichnungsendadresse des Programms in der Zeitschiebeaufzeichnungstabelle, die Genreinformationen aufweist, wenn ein Kanal auf einen geänderten Kanal geändert wird und
vorübergehendes Speichern eines Programms des geänderten Kanals in dem ersten Speicherbereich (S1),
ferner **dadurch gekennzeichnet, dass**
das Verfahren ferner das Überprüfen, ob der Benutzer das dauerhafte Speichern des vorübergehend gespeicherten Programms gemäß der Zeitschiebefunktion durch eine Benutzerschnittstelle (106) anordnet, aufweist,
wobei, wenn der Benutzer das dauerhafte Speichern des vorübergehend gespeicherten Programms gemäß der Zeitschiebefunktion durch die Benutzerschnittstelle (106) anordnet, das Verfahren die Ausgabe einer Bildschirmanzeigeanleitung aufweist, die fragt, ob das Programm automatisch oder durch die Benutzereingabe der Start- und Endadressen des Programms ausgewählt wird,
wobei, wenn der Benutzer die automatische Auswahl des Programms gemäß dem Bildschirmanzeigeanleitung wählt, das Verfahren das Abrufen der Zeitschiebe-Aufzeichnungstabelle von dem dritten Speicher (104) und das Steuern des Bildschirmanzeige-Generators aufweist, um die BildschirmanzeigeDaten zum Anzeigen der Liste der Rundfunkprogramme in dem Zeitschiebespeicherbereich zu erzeugen, und das Verfahren ferner das Überprüfen, ob der Benutzer eines der Programme, das eine Bildschirmanzeige anzeigt, auswählen will, aufweist,
wobei, wenn der Benutzer eines der Programme wählt, welche die Bildschirmanzeige anzeigt, das Verfahren das Abrufen der Zeitschiebeaufzeichnungtabelle für das Programm von dem dritten Speicher (104) aufweist und die Start- und Endadressen des Programms von der Zeitschiebeaufzeichnungstabelle feststellt,
wobei, nach dem Feststellen der Start- und Endadressen des Programms, das Verfahren das dauerhafte Speichern des Programms in dem zweiten Speicherbereich (S2) gemäß den Start- und Endadressen aufweist, wobei das dauerhafte Speichern gemäß einem Genre des Programms, das in der Zeitschiebeaufzeichnungstabelle enthalten ist, ausgeführt wird,
wobei, wenn das Programm durch die Benutzereingabe der Start- und Endadressen des Programms ausgewählt ist, das Verfahren das Erhalten der Start- und Endadressen des Programms von dem Benutzer über die Benutzerschnittstelle (106), das Abrufen des Programms gemäß den Start- und Endadressen und das dauerhafte Speichern des Programms in dem zweiten Speicherbereich (S2) aufweist.

13. Verfahren nach Anspruch 12, das ferner das Speichern der Programminformationen des Programms aufweist, wenn der Benutzer den Kanal ändert.

14. Verfahren nach Anspruch 13, wobei die Programminformationen von einer Packet-Identification (PID) und einem elektronischen Programmführer (EPG, Electronic Program Guide) erhalten werden.

15. Verfahren nach Anspruch 12, das ferner das Speichern der Programminformationen des Programms aufweist, wenn der Kanal ein anderes Programm anzeigt.

16. Verfahren nach Anspruch 15, wobei die Programminformationen von einer Packet-Identification (PID) und einem elektronischen Programmführer (EPG) erhalten werden.

17. Verfahren nach Anspruch 12, das ferner das Speichern der Programminformationen des Programms aufweist, wenn externe Eingabedaten eingegeben werden.

18. Verfahren nach Anspruch 17, wobei die Programminformationen von einer Packet-Identification (PID) und einem elektronischen Programmführer (EPG) erhalten werden.

19. Verfahren nach Anspruch 12, welches, wenn eine Adresse in dem Programm ausgewählt ist, automatisches Feststellen der Start- und Endadressen des Programms und dauerhaftes Speichern des Programms aufweist.

## Revendications

1. Appareil destiné à enregistrer de façon permanente un programme pendant le fonctionnement d'une fonction de contrôle du direct, comprenant :
un récepteur conçu pour recevoir un programme ;
un lecteur de disque dur incluant un disque dur comportant une première zone mémoire (S1) et une deuxième zone mémoire (S2), la première zone mémoire (S1) étant conçue pour enregistrer temporairement le programme reçu ;
un générateur de données d'affichage à l'écran (138) pour afficher des données d'écran sur un écran ;
un générateur d'adresses conçu pour générer des informations de localisation indiquant un emplacement où le programme est stocké dans la première zone mémoire (S1), les informations de localisation générées incluant une adresse de début d'enregistrement ;
une troisième mémoire (104) ; et
un contrôleur (102) conçu pour contrôler l'affichage des informations de programme du programme et contrôler le stockage permanent du programme dans la deuxième zone mémoire (S2),
**caractérisé en ce que** :
la fonction de contrôle du direct fournit une mise en pause, un retour en arrière et un redémarrage des programmes mis en pause en temps réel ;
les informations de localisation incluent également une adresse de fin d'enregistrement ;
la troisième mémoire (104) et conçue pour stocker une table d'enregistrement de contrôle du direct contenant des informations de programme du programme, les informations de localisation générées et des informations de genre ; et
le contrôleur (102) est conçu pour provoquer le stockage de l'adresse de fin d'enregistrement dans la table d'enregistrement de contrôle du direct quand on change de canal vers un canal modifié et pour enregistrer temporairement un programme du canal modifié dans la première zone mémoire (S1),
**caractérisé en outre en ce que** :
le contrôleur est conçu pour vérifier si l'utilisateur demande de stocker de façon permanente le programme enregistré temporairement selon la fonction de contrôle du direct via une interface d'utilisateur (106),
où quand l'utilisateur demande de stocker de façon permanente le programme enregistré temporairement selon la fonction de contrôle du direct via l'interface d'utilisateur (106), le contrôleur est conçu pour émettre un guide affiché à l'écran qui demande si le programme est choisi automatiquement ou par l'entrée d'utilisateur des adresses de début été de fin du programme,
où si l'utilisateur choisit une sélection automatique du programme selon le guide affiché à l'écran, le contrôleur est conçu pour extraire la table d'enregistrement de contrôle du direct de la troisième mémoire (104) et pour contrôler le générateur d'affichage à l'écran afin de générer les données d'affichage à l'écran pour afficher la liste des programmes de télédiffusion dans la zone de mémorisation du contrôle du direct et pour vérifier si l'utilisateur veut sélectionner un des programmes que montre un affichage à l'écran,
où quand l'utilisateur choisit un des programmes que montre un affichage à l'écran, le contrôleur est conçu pour extraire la table d'enregistrement de contrôle du direct pour le programme de la troisième zone mémoire (104) et trouver les adresses de début et de fin du programme dans la table d'enregistrement de contrôle du direct,
où après avoir trouvé les adresses de début et de fin du programme, le contrôleur est conçu pour enregistrer le programme de façon permanente dans la deuxième zone mémoire (S2) en fonction des adresses de début et de fin du programme, l'enregistrement permanent étant effectué selon un genre de programme contenu dans la table d'enregistrement de contrôle du direct,
où si le programme est choisi par l'entrée d'utilisateur des adresses de début et de fin du programme, le contrôleur est conçu pour obtenir les adresses de début et de fin du programme de l'utilisateur via l'interface d'utilisateur (106), extraire le programme en fonction des adresses de début et de fin du programme, et enregistrer de façon permanente le programme dans la deuxième zone mémoire (S2).

2. Appareil selon la revendication 1, comprenant en outre un enregistreur vidéo personnel (PVR).

3. Appareil selon la revendication 1, comprenant en outre une interface d'utilisateur (106) pour recevoir la demande.

4. Appareil selon la revendication 1, dans lequel la
table d'enregistrement de contrôle du direct est actualisée toutes les fois où on change de canal ou de programme.

5. Appareil selon la revendication 1, dans lequel le contrôleur (102) est conçu pour contrôler le générateur de données d'affichage à l'écran qui affiche une liste de programmes temporairement enregistrés.

6. Appareil selon la revendication 1 dans lequel, quand un utilisateur choisit un programme qui est affiché à l'écran en utilisant le générateur de données d'affichage à l'écran, le programme sélectionné est copié depuis la première zone mémoire dans la deuxième zone mémoire (S2).

7. Appareil selon la revendication 1, dans lequel la troisième mémoire (103) enregistre diverses informations, y compris des commandes de traitement du contrôleur (102).

8. Appareil selon la revendication 7, dans lequel la troisième mémoire (103) enregistre la table d'enregistrement de contrôle du direct comprenant plusieurs informations d'enregistrement de contrôle du direct.

9. Appareil selon la revendication 8, dans lequel la table d'enregistrement de contrôle du direct contient des titres, des genres, des informations de programme, des adresses de début et des adresses de fin d'enregistrement du programme enregistré temporairement.

10. Appareil selon la revendication 1, comprenant en outre un tuner (18) destiné à chercher un canal en fonction d'un signal de contrôle du contrôleur (102) et à fournir des signaux numériques à un processeur de signaux numériques (110) et des signaux analogiques à un processeur de signaux analogiques (116).

11. Appareil selon la revendication 1, dans lequel la deuxième zone mémoire (S2) comporte plusieurs zones de stockage de programmes par genres.

12. Procédé d'enregistrement permanent d'un programme le fonctionnement d'une fonction de contrôle du direct, comprenant :
la réception d'un programme ;
le stockage temporaire du programme reçu dans une première zone mémoire (S1) d'un lecteur de disque dur incluant un disque dur selon la fonction de contrôle du direct ;
la génération d'informations de localisation indiquant un emplacement où le programme est stocké dans la première zone mémoire (S1), les informations de localisation générées incluant une adresse de début d'enregistrement affichant des informations de programme et recevant une requête d'enregistrement du programme ;
l'extraction des informations de localisation générées ; et
l'enregistrement permanent du programme dans une deuxième zone mémoire (S2) du lecteur de disque dur,
le procédé comprenant en outre :
le stockage des informations de localisation générées dans une table d'enregistrement de contrôle du direct dans une troisième mémoire (104) ; et
**caractérisé en ce que** :
la fonction de contrôle du direct fournit une mise en pause, un retour en arrière et un redémarrage des programmes mis en pause en temps réel ;
les informations de localisation incluent également une adresse de fin d'enregistrement ;
l'enregistrement de l'adresse de fin d'enregistrement du programme dans la table d'enregistrement de contrôle du direct comprenant des informations de genre quand on change de canal ou de programme ; et
l'enregistrement temporaire d'un programme du canal modifié dans la première zone mémoire (S1),
**caractérisé en outre en ce que** :
le procédé comprend en outre de vérifier si l'utilisateur demande de stocker de façon permanente le programme enregistré temporairement selon la fonction de contrôle du direct via une interface d'utilisateur (106),
où quand l'utilisateur demande de stocker de façon permanente le programme enregistré temporairement selon la fonction de contrôle du direct via l'interface d'utilisateur (106), le contrôleur est conçu pour émettre un guide affiché à l'écran qui demande si le programme est choisi automatiquement ou par l'entrée d'utilisateur des adresses de début été de fin du programme,
où si l'utilisateur choisit une sélection automatique du programme selon le guide affiché à l'écran, le procédé comprend d'extraire la table d'enregistrement de contrôle du direct pour le programme de la troisième mémoire (104) et de trouver les adresses de début et de fin du programme dans la table d'enregistrement de contrôle du direct,
où une fois trouvées les adresses de début et de fin du programme, le procédé comprend d'enregistrer de façon permanente le programme dans la deuxième zone mémoire (S2) en fonction des adresses de début et de fin, l'enregistrement permanent étant effectué selon un genre de programme contenu dans la table d'enregistrement de contrôle du direct,
où si le programme est choisi par l'entrée d'utilisateur des adresses de début et de fin du programme, le procédé comprend d'obtenir les adresses de début et de fin du programme de l'utilisateur via l'interface d'utilisateur (106), extraire le programme en fonction des adresses de début et de fin du programme, et enregistrer de façon permanente le programme dans la deuxième zone mémoire (S2).

13. Procédé selon la revendication 12, comprenant en outre d'enregistrer les informations du programme quand l'utilisateur change de canal.

14. Procédé selon la revendication 13, dans lequel les informations de programme sont obtenues à partir des identifiants de paquet (PID) et du guide électronique des programme (EPG).

15. Procédé selon la revendication 12, comprenant en outre d'enregistrer les informations du programme quand le canal affiche un nouveau programme.

16. Procédé selon la revendication 15, dans lequel les informations de programme sont obtenues à partir des identifiants de paquet (PID) et du guide électronique des programme (EPG).

17. Procédé selon la revendication 12, comprenant en outre d'enregistrer les informations du programme quand ont fournies des données d'entrée externe.

18. Procédé selon la revendication 17, dans lequel les informations de programme sont obtenues à partir des identifiants de paquet (PID) et du guide électronique des programme (EPG).

19. Procédé selon la revendication 12 comprenant, si une adresse quelconque est sélectionnée dans le programme, de chercher automatiquement les adresses de début et de fin du programme et d'enregistrer le programme de façon permanente.
